# EUROPÄISCHE PATENTSCHRIFT

(11) **EP 3 120 960 B1**
(45) Veröffentlichungstag und Bekanntmachung des Hinweises auf die Patenterteilung: **14.06.2023**
(21) Anmeldenummer: 15177426.2
(22) Anmeldetag: 20.07.2015
(51) Int. Cl.: B23F 21/02, B23F 23/12, B23F 9/02, B23F 19/12

(54) **VERFAHREN ZUM NACHBEARBEITEN EINES KEGELRADS IM BEREICH DES ZAHNKOPFES, MASCHINE ZUM BEARBEITEN VON KEGELRÄDERN**
METHOD FOR FINISHING A BEVEL GEAR IN THE AREA OF THE TIP, MACHINE FOR MACHINING BEVEL GEARS
PROCEDE DE RETRAITEMENT D'UNE ROUE CONIQUE DANS LA ZONE D'UNE TETE DE DENT, MACHINE DE TRAITEMENT DE ROUES CONIQUES

(43) Veröffentlichungstag der Anmeldung: 25.01.2017
(73) Patentinhaber: Klingelnberg AG, 8050 Zürich (CH)
(72) Erfinder: Wyman, Hastings, Saline, MI Michigan MI 48176 (US)
(74) Vertreter: Janke Scholl Patentanwälte PartG mbB

(56) Entgegenhaltungen:
- WO-A2-01/41960
- DE-A1- 10 211 129
- DE-A1- 10 303 208
- US-A- 2 539 449
- BEIER H: "ZAHNFLANKENSCHLEIFEN MIT CNC-PROFILIERTEN SCHEIBEN", WERKSTATT + BETRIEB, CARL HANSER VERLAG, MÜNCHEN DE, Bd. 132, Nr. 9, 1. September 1999 (1999-09-01), Seite 57/58,60, XP000883299, ISSN: 0043-2792

## Beschreibung

### Gebiet der Erfindung

Gegenstand der Erfindung ist ein Verfahren zum Nachbearbeiten eines Kegelrads im Bereich des/der Zahnköpfe sowie Maschinen, die zum Bearbeiten von Kegelrädern im Bereich des/der Zahnköpfe ausgelegt sind.

### Hintergrund der Erfindung, Stand der Technik

Es gibt Anwendungsbereich für Kegelräder, die spezielle Vorgaben in Sachen Geometrie, Genauigkeit usw. bedingen. Während die Gestaltung der Kopfkante von Kegelrädern bei zahlreichen Anwendung nur eine untergeordnete Rolle spielt, so verlangen z.B. die Kegelrad-Spezifikationen für Helikopter einen genau definierte Übergang zwischen den Zahnflanken und den Zahnköpfen.

So verlangen z.B. diese Kegelrad-Spezifikationen einen Radius der Kopfkanten im Bereich zwischen 0,005" (0,127 mm) und 0,015" (0,381 mm). Das Herstellen von Kegelrädern in dem beispielhaft genannten Bereich ist aufwendig und fehleranfällig.

Es stellt sich in Anbetracht der obigen Ausführungen die folgende Aufgabe. Es geht darum einen Ansatz zu finden, der es ermöglicht die Kopfkanten von Kegelrädern genau und reproduzierbar mit Toleranzen zu fertigen, die im Bereich liegen, der kleiner ist als 1 mm. Vorzugsweise werden mit dem Verfahren der Erfindung Kopfkanten gefertigt, deren Toleranz im Bereich zwischen 500 µm und 1 µm liegen. Insbesondere soll es um einen Ansatz gehen, der einen Zugang zur teilautomatisierten oder vollautomatisierten Bearbeitung der Kopfflanken von Kegelrädern ermöglicht.

Gemäß Erfindung wird ein Verfahren zur Verfügung gestellt, dessen Merkmale dem Anspruch 1 zu entnehmen sind. Das Dokument DE10303208 zeigt ein gattungsgemäßes Verfahren. Gemäß DE10303208 wird ein Kopfkantenbruch mittels eines Fräswerkzeugs erzeugt.

Gemäß Erfindung wird auch eine Maschine zur Verfügung gestellt, deren Merkmale dem Anspruch 6 zu entnehmen sind.

Das Dokument WO0141960A2 zeigt ein Schleifwerkzeug mit konkaver Bearbeitungsfläche.

In Abhängigkeit von den Toleranzen, mit denen die Kopfkanten zu produzieren sind, kann das Verfahren der Erfindung im weichen Material (d.h. vor einer Temperaturbehandlung des Werkstücks) oder im gehärteten Material (d.h. nach einer Temperaturbehandlung des Werkstücks) durchgeführt werden.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Ansicht zweier Zähne und einer Zahnlücke eines spiralverzahnten Kegel- oder Hypoidrads;
- **FIG. 2**: zeigt eine schematische Ansicht eines Zahnes eines weiteren Kegel- oder Hypoidrads im Normalschnitt, wobei an diesem Kegelrad Kopffasen vorgesehen wurden (diese Kopffasen sind der Deutlichkeit halber besonders gross dargestellt);
- **FIG. 3A**: zeigt eine schematische Ansicht eines Zahnes eines weiteren Kegel- oder Hypoidrads im Normalschnitt, wobei dieser Zahn vor dem Ausführen der erfindungsgemässen Nachbearbeitung dargestellt ist;
- **FIG. 3B**: zeigt eine schematische Ansicht des Zahnes der Fig. 3A nach dem Ausführen der erfindungsgemässen Nachbearbeitung;
- **FIG. 4**: zeigt eine vergrößerte, schematische Ansicht eines Zahnes eines weiteren Kegelrad-Ritzels im Normalschnitt, wobei an diesem Kegelrad Kopffasen in Form von Kopfkantenrundungen vorgesehen wurden (zu der linken Kopfkantenrundungen ist ein Hilfskreisbogen dargestellt);
- **FIG. 5**: zeigt eine schematische Perspektivansicht eines Teils eines weiteren Kegel- oder Hypoidrads, wobei sämtliche Zähne mit Kopffasen versehen sind;
- **FIG. 6**: zeigt eine schematische Perspektivansicht eines einzelnen Zahnes eines weiteren Kegel- oder Hypoidrads, wobei dieser Zahn an der konkaven Seite mit einer Kopffase versehen ist;
- **FIG. 7A**: zeigt eine schematische Ansicht eines weiteren Kegel- oder Hypoidrads in einer schrägen Draufsicht, wobei im gezeigten Moment ein konventionelles Schleifwerkzeug (im Radialschnitt gezeigt) schräg in eine der Zahnlücken eintaucht, um eine Zahnflanke zu bearbeiten;
- **FIG. 7B**: zeigt eine schematische Schnittansicht des konventionellen Schleifwerkzeugs der Fig. 7A (im Axialschnitt gezeigt);
- **FIG. 8**: zeigt eine schematische Ansicht des Zahnes der Fig. 2 zusammen mit einem Axialschnitt durch ein Schleifwerkzeug, wobei der konkave ringförmige Bereich des Schleifwerkzeugs im gezeigten Moment die Kopffase der rechten Zahnflanke bearbeitet;
- **FIG. 9**: zeigt eine schematische Schnittansicht eines weiteren Schleifwerkzeugs (im Axialschnitt gezeigt), das hier eine Scheibenform hat;
- **FIG. 10**: zeigt eine schematische Seitenansicht eines Teils einer 2-Spindel-Schleifmaschine (Bearbeitungsmaschine) mit einem konventionellen Schleifwerkzeug und mit einem Schleifwerkzeug, wobei die Schleifmaschine (optional) eine spezielle Abrichtscheibe umfasst;
- **FIG. 11**: zeigt eine schematische Darstellung einer Bearbeitungsmaschine der Erfindung mit Achsenbezeichnungen.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

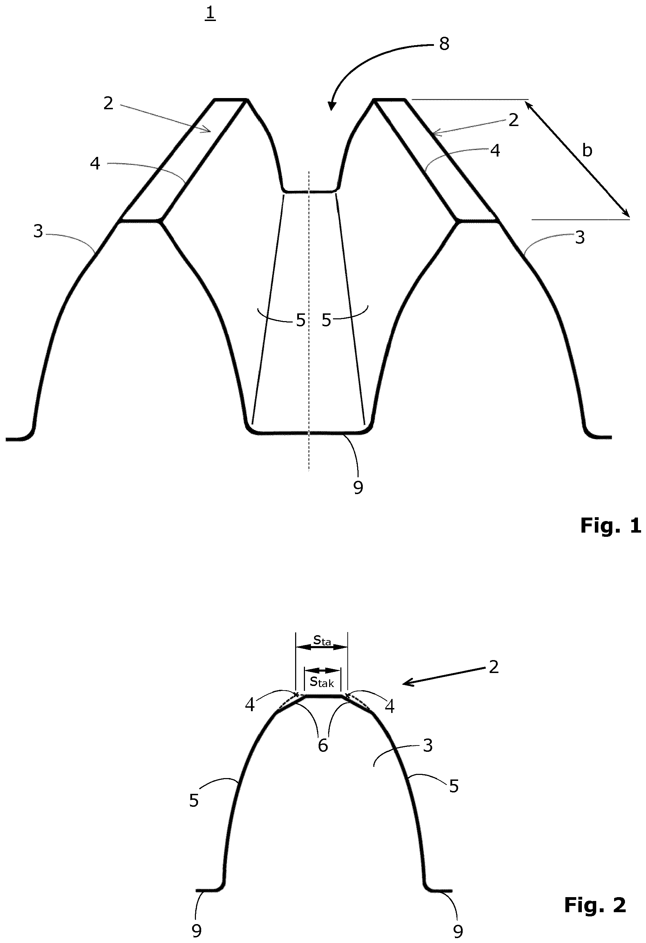

In Fig. 1 ist eine schematische Darstellung einer Verzahnung eines Kegelrades 1 gezeigt, die rechts und links einer Zahnlücke 8 je einen Zahn 3 aufweist. Die Darstellung der Fig. 1 ist aus der ISO23509 Norm abgeleitet. Außerdem wurden Details der Norm DIN 3960 verwendet. Um die Spiralverzahnung in Fig. 1 in der gezeigten Form darstellen zu können, wurde die Spiralverzahnung rechnerisch in eine sehr große Anzahl von Normalschnitte zerlegt und diese Normalschnitte wurden im Stile von Stirnschnitten hintereinander gelegt. Die folgenden Begriffe sind entsprechend der genannten Normen wie folgt festgelegt: Zahnkopf 2, (Kopf-)Kante 4, Zahnflanke 5, Zahnfuß 9, Zahnbreite b, Zahnkopfdicke sₜₐ (siehe Fig. 2). Die Ferse des Kegelrads 1 liegt in Fig. 1 vorne und die Zehe liegt hinten (sie ist daher in Fig. 1 nicht sichtbar).

In Fig. 2 ist eine schematische Darstellung eines Zahnes 3 eines anderen Kegelrades 1 gezeigt. Im Bereich der Kopfkanten 4 wurden sogenannte Kopffasen 6 vorgesehen. Der gezeigte Zahn 3 hat übertrieben bauchige Zahnflanken 5 und überdimensionierte Kopffasen 6, was der besseren Darstellbarkeit geschuldet ist. Durch das Herausarbeiten dieser Kopffasen 6 an den Kopfkanten 4 im Rahmen einer sogenannten Nachbearbeitung, reduziert sich die Zahnkopfdicke sₜₐ. Die Restzahnkopfdicke, die sich ergibt, ist hier mit sₜₐₖ bezeichnet. Die Durchtrittspunkte der ehemaligen Kopfkanten 4 durch die Zeichenebene sind in Fig. 2 durch zwei kleine Kreuze dargestellt.

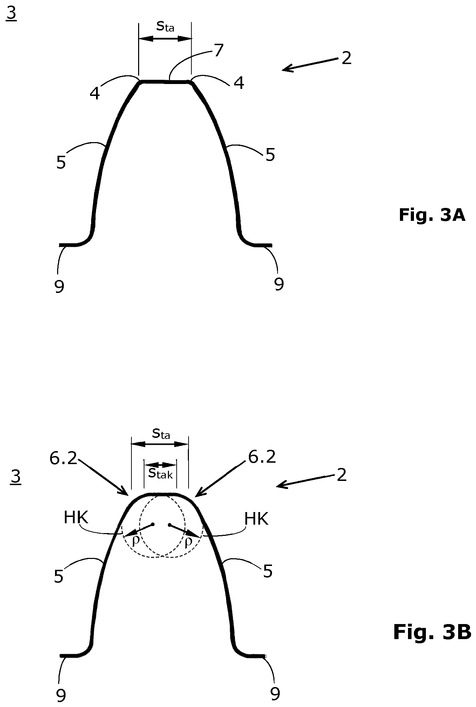

Das Wort "Kopffase" ist bei allen Ausführungsformen als Oberbegriff sowohl für einen Kopfkantenbruch 6.1 als auch für eine Kopfkantenrundung 6.2 zu verstehen. Ein Kopfkantenbruch 6.1 hat im Normalschnitt betrachtet einen geradlinigen Verlauf (siehe Fig. 2). Den Kopfkantenbruch 6.1 kann man auch als Sekante definieren, die am Kopf 2 eines Zahnes 3 (im Bereich der Kopfkante 4) ein Stück des Materials wegnimmt. Eine Kopfkantenrundung 6.2 hat im Normalschnitt betrachtet einen gekrümmten, konvexen Verlauf (siehe z.B. Fig. 3B).

Fig. 3A zeigt eine schematische Ansicht eines Zahnes 3 eines weiteren Kegel- oder Hypoidrads im Normalschnitt, wobei dieser Zahn 3 vor dem Ausführen der erfindungsgemäßen Nachbearbeitung dargestellt ist. Die gekrümmten Flankenflächen 5 schneiden sich mit einer Kopffläche 7, die den Zahnkopf 2 noch oben hin begrenzt. Die entsprechenden Schnittlinien werden hier als Kopfkanten 4 bezeichnet. Der Zahnkopf 2 hat in der gezeigten Momentaufnahme eine Zahnkopfdicke sₜₐ.

Aufgehend von der in Fig. 3A gezeigten Situation, wird jetzt die erfindungsgemäße Nachbearbeitung durchgeführt. Als Resultat ergibt sich der in Fig. 3B gezeigte Zahn 3. Im Beispiel der Fig. 3B wurden durch das spanende Entfernen von Material Kopfkantenrundungen 6.2 herausgearbeitet. Es sind zwei Hilfskreise HK in strichlierter Form dargestellt, um so den Krümmungsradius ρ der beiden Kopfkantenrundungen 6.2 darstellen zu können. Die Restzahnkopfdicke sₜₐₖ, die sich ergibt, ist kleiner als Zahnkopfdicke sₜₐ.

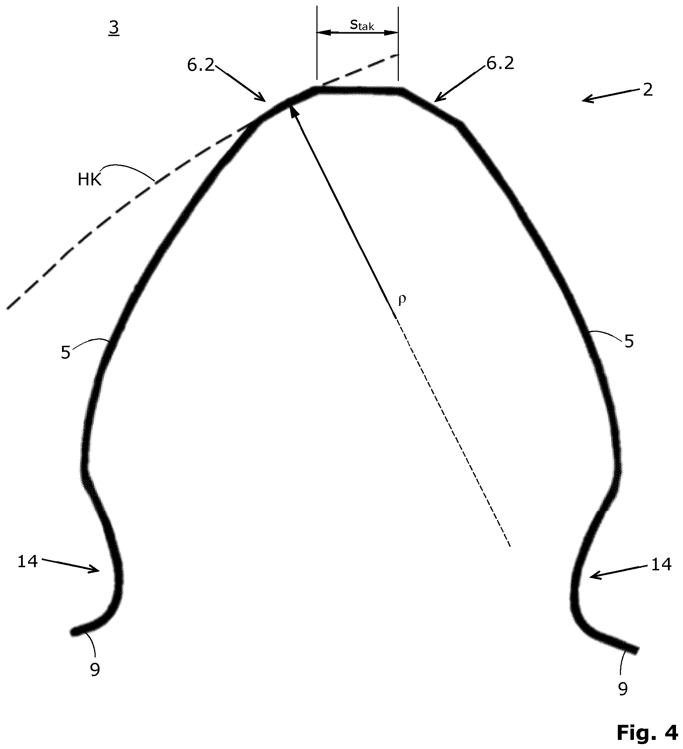

Fig. 4 zeigt eine stark vergrößerte, schematische Ansicht eines Zahnes 3 eines weiteren Kegelrads 1 (hier ein Kegelrad-Ritzel) im Normalschnitt. Auch dieser Zahn 3 hat übertrieben bauchige Zahnflanken 5 sowie Fußrundungen 14. Die beiden Kopffasen 6 haben hier Dimensionen, die näher an der Realität sind als bei den Darstellungen der Figuren 2 und 3B. An dem Kegelrad 1 der Fig. 4 sind wiederum Kopffasen 6 in Form von Kopfkantenrundungen 6.2 vorgesehen. Zu der linken Kopfkantenrundung 6.2 ist ein Hilfskreisbogen HK dargestellt. Der Krümmungsradius ρ des Hilfskreisbogens HK ist hier deutlich grösser als in Fig. 3B. Der Mittelpunkt des Hilfskreisbogens HK der Fig. 4 liegt ausserhalb des gezeigten Bereichs.

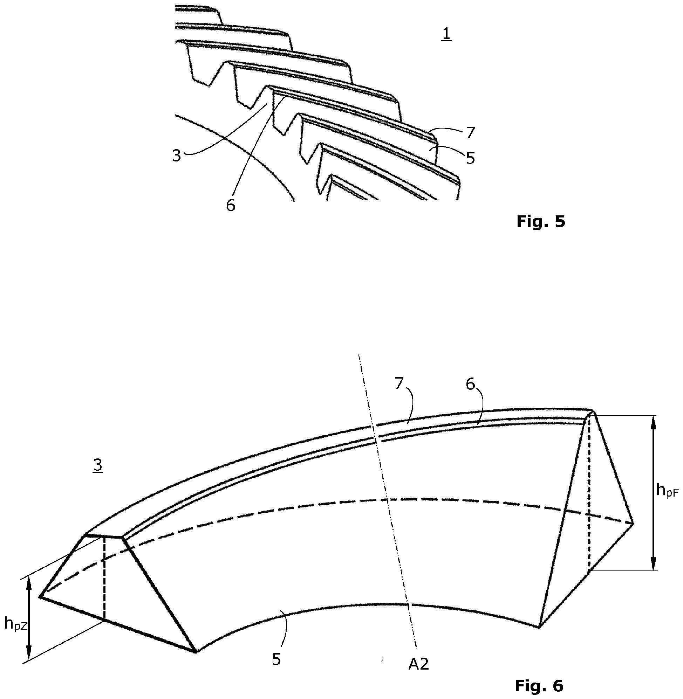

In Fig. 5 ist eine schematische Perspektivansicht eines Teils eines spiralverzahnten Kegelrads 1 (rechtssteigend) gezeigt, wobei sämtliche Zähne 3 mit Kopffasen 6 versehen sind. In Fig. 5 sind die Dimensionen der Kopffasen 6 in etwa in ihrer wirklichen Grösse dargestellt.

Fig. 6 zeigt eine schematische Perspektivansicht eines einzelnen Zahnes 3 eines weiteren spiralverzahnten Kegelrads 1, wobei dieser Zahn 3 an der konkaven Flanke mit einer Kopffase 6 versehen ist. In Fig. 6 sind die Dimensionen der Kopffasen 6 in etwa in ihrer wirklichen Grösse dargestellt. Der Zahn 3 verjüngt sich von der Ferse zur Zehe. Die Zahnhöhe h_{pF} an der Ferse ist grösser als die Zahnhöhe h_{pZ} an der Zehe. Die Dimension der Kopffasen 6 von der Ferse zur Zehe bleibt jedoch auch bei solchen Kegelrädern 1 entlang der Zahnbreite b gleich. In Fig. 6 ist die schräg im Raum liegende Werkzeug-Rotationsachse A2 angedeutet, die vorgegeben wird, um die gezeigten Kopffasen 6 mit dem Schleifwerkzeug 10 schleifen zu können. Bei der gezeigten Lage der Werkzeug-Rotationsachse A2 handelt es sich um eine Momentaufnahme.

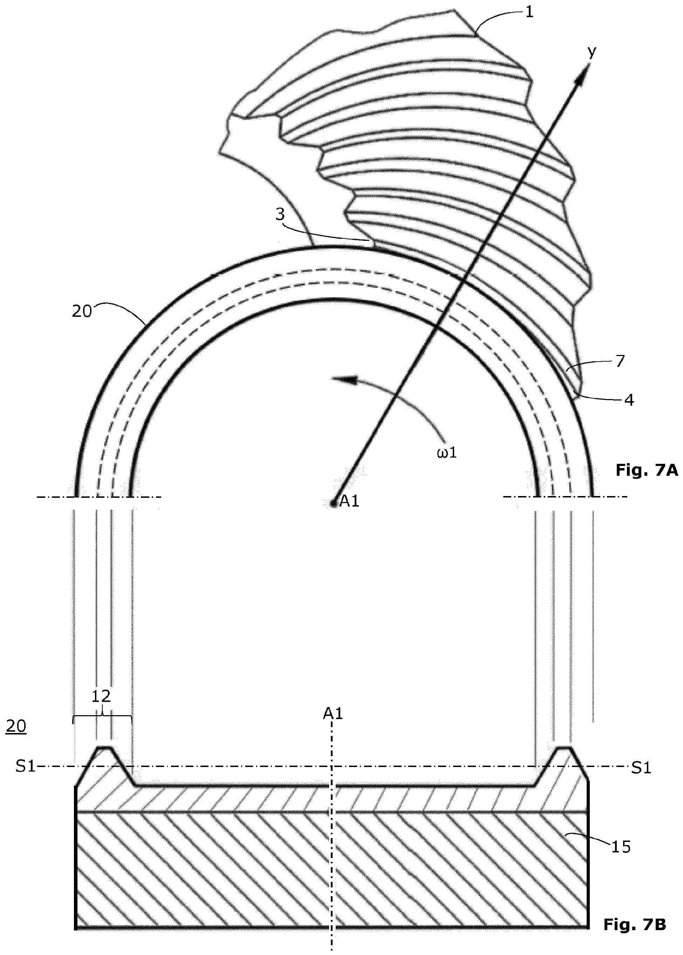

Die Fig. 7A zeigt eine schematische Ansicht eines Stücks eines weiteren Kegel- oder Hypoidrads 1 in einer schrägen Draufsicht. Im gezeigten Moment taucht ein konventionelles Schleifwerkzeug 20 schräg in einer der Zahnlücken des Kegel- oder Hypoidrads 1 ein. Das Schleifwerkzeug 20 ist hier im Radialschnitt gezeigt, d.h. die Werkzeug-Rotationsachse A1 steht senkrecht auf der Zeichenebene. Die Werkstück-Rotationsachse B ist nicht gezeigt. Sie steht schräg zur Werkzeug-Rotationsachse A1 und würde in der Abbildung der Fig. 7A schräg nach rechts oben aus der Zeichenebene heraus stehen.

Man blickt in Fig. 7A von der Rückseite auf das konventionelle Schleifwerkzeug 20, das hier als Topfschleifscheibe ausgeführt ist. Details dieses Schleifwerkzeugs 20 sind in Fig. 7B in Form einer schematischen Schnittansicht im Axialschnitt gezeigt. In Fig. 7B kann man erkennen, dass dieses Schleifwerkzeug 20 eine Topfform hat. Diese Topfform ergibt sich aus einer kreisförmig umlaufenden, stirnseitigen Topfkante, die hier mit dem Bezugszeichen 12 bezeichnet ist. Diese Topfkante 12 liegt bei der gezeigten Ausführungsform nahezu am äussersten Umfang eines zylindrischen oder kegelstumpfförmigen Grundkörpers 15.

Statt des Tauchens kann im Zusammenhang mit der vorliegenden Erfindung bei allen Ausführungsformen auch ein anderes Verfahren zum Bearbeiten der Zahnflanken 5 zum Einsatz kommen (z.B. ein generierendes Verfahren).

Zusätzlich zu dem Werkzeug 20, das zur (tauchenden oder generierenden) Bearbeitung der Zahnflanken 5 zum Einsatz gebracht wird (wie beispielsweise in Fig. 7A und 7B gezeigt ist), kommt ein spezielles Werkzeug 10 zum Einsatz, dessen Details im Folgenden anhand von Ausführungsbeispielen beschrieben werden.

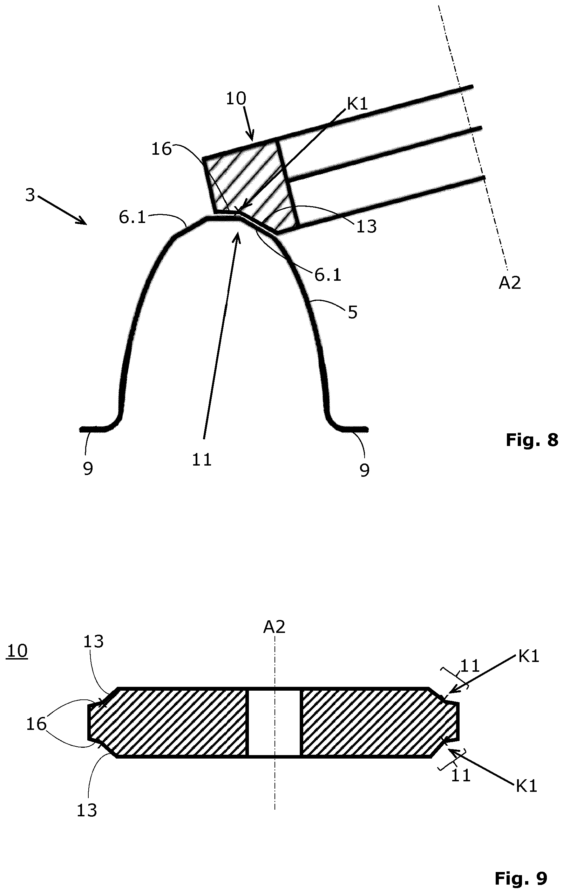

Das spezielle Schleifwerkzeug 10 ist bei allen Ausführungsformen rotationssymmetrisch zu der Werkzeug-Rotationsachse A2 ausgelegt. Es weist bei allen Ausführungsformen einen Bearbeitungsbereich 11 auf, der konkav ist. Dieser Bearbeitungsbereich 11 hat eine Ringform, die sich aus zwei ringförmigen Flächen 13 und 16 ergibt. Diese beiden Ringflächen sind in den Figuren 8 und 9 als Schnittlinien bzw. Kurven mit der Zeichenebene zu erkennen.

Die genannten ringförmigen Flächen 13 und 16 schneiden einander in einem Kreis K1, der konzentrisch zu der Werkzeug-Rotationsachse A2 liegt. Der Durchtritt dieses Kreises K1 durch die Zeichenebene ist in den Figuren 8 und 9 durch kleine Kreuze sichtbar gemacht.

Bei allen Ausführungsformen dient mindestens eine der beiden ringförmigen Flächen (hier die Fläche 13) als sogenannte Arbeitsfläche. Mindestens diese Fläche 13 ist mit einem abrasiven Material versehen. Diese Arbeitsfläche 13 ist bei allen Ausführungsformen konzentrisch zu der Werkzeug-Rotationsachse A2 angeordnet.

Anhand der Figuren 8 bis 11 werden Details des Verfahrens der Erfindung beschrieben.

Es geht speziell um ein Verfahren zum Nachbearbeiten eines Kegelrads 1 im Bereich des Zahnkopfes 2 eines Zahns 3. Das Verfahren der Erfindung umfasst bei allen Ausführungsformen mindestens die folgenden Schritte. Um diese Nachbearbeitung mit hoher Genauigkeit ausführen zu können, wird das Kegelrad 1 vor dem Nachbearbeiten nicht umgespannt. D.h. das Kegelrad 1 verbleibt in derselben Aufspannung, die auch im Rahmen einer vorhergehenden Bearbeitung (die z.B. mit einem Werkzeug 20 erfolgt ist, wie in Fig. 7A und 7B gezeigt) genutzt wurde.

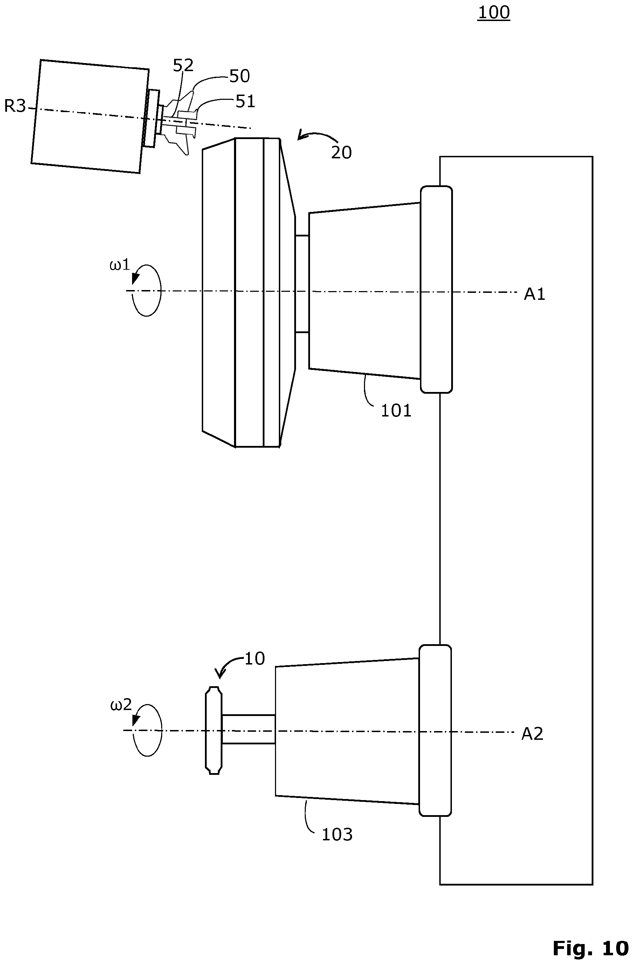

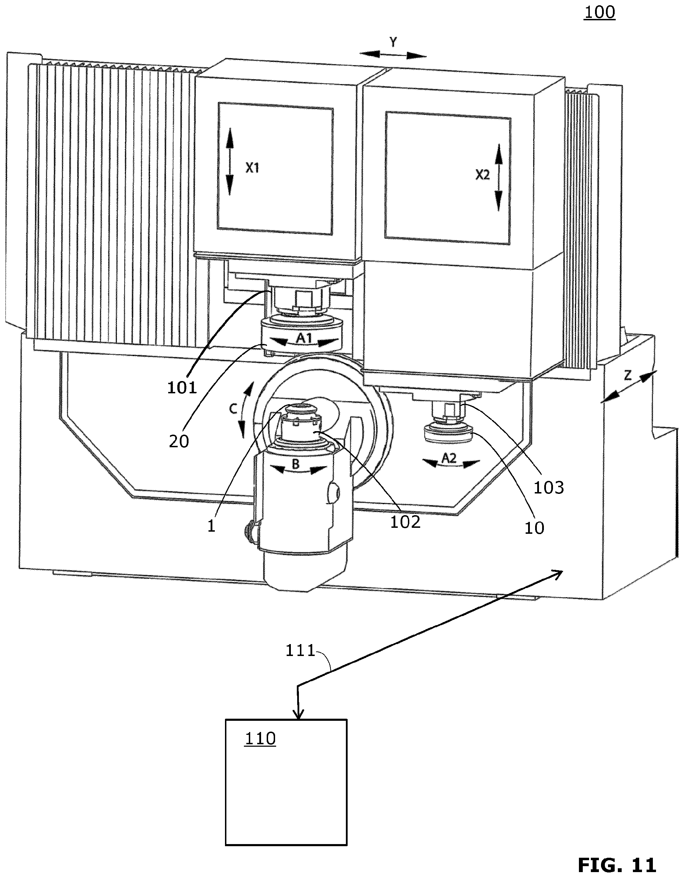

Vorzugsweise wird das Verfahren der Erfindung in einer 2-Spindel-Maschine 100 durchgeführt, wie in den Figuren 10 und 11 anhand zweier Beispiele gezeigt. Eine erste (Werkzeug-)Spindel 101 trägt das (konventionelle) Werkzeug 20 zum Bearbeiten der Flanken 3. Eine zweite (Werkzeug-)Spindel 103 trägt das spezielle Werkzeug 10 zum Bearbeiten der Fasen 6. Das Verfahren der Erfindung kann aber auch in einer Maschine 100 durchgeführt werden, die nur eine (Werkzeug-)Spindel 101 umfasst. In diesem Fall muss vor dem Bearbeiten der Fasen 6 das (konventionelle) Werkzeug 20 abgenommen und das spezielle Werkzeug 10 an der (Werkzeug-)Spindel 101 befestigt werden.

Vor dem Durchführen des Verfahrens der Erfindung wird ein Kegelrad 1 an einer Werkstückspindel 102 einer Bearbeitungsmaschine 100 befestigt, wie in Fig. 11 anhand eines Beispiels gezeigt. Bei dem Kegelrad 1 handelt es sich bei allen Ausführungsformen um ein Kegelrad 1, das z.B. mit einem ersten Bearbeitungswerkzeug 20 (vor-)bearbeitet wurde, wie beispielsweise in den Figuren 7A und 7B gezeigt. Um das Kegelrad 1 mit dem ersten Bearbeitungswerkzeug 20 (vor-)bearbeiten zu können, wird das erste Bearbeitungswerkzeug 20 z.B. an einer ersten Werkzeugspindel 101 der Maschine 100 bereitgestellt. Dann erfolgt das Bearbeiten (z.B. eine schleifende Bearbeitung) des Kegelrads 1 mittels des ersten Bearbeitungswerkzeugs 20 in bekannter Art und Weise. Die entsprechende Drehbewegung des Werkzeugs 20 wird als Winkelgeschwindigkeit ω1 und die entsprechende Werkzeugachse ist mit A1 bezeichnet.

Nun folgt erst die Nachbearbeitung der Erfindung. Die Nachbearbeitung kann bei allen Ausführungsformen unmittelbar nach dem Bearbeiten mit dem Werkzeug 20 erfolgen, oder die Nachbearbeitung erfolgt nachdem weitere (Zwischen-)Schritte ausgeführt wurden. Es wird für die Nachbearbeitung das Schleifwerkzeug 10 an der ersten Werkzeugspindel 101 oder an einer zweiten Werkzeugspindel 103 der Bearbeitungsmaschine 100 bereitgestellt.

Das Kegelrad 1 wird dann um die Werkstück-Rotationsachse B der Werkstückspindel 102 drehangetrieben und das Schleifwerkzeug 10 wird um die Werkzeug-Rotationsachse A1 der Werkzeugspindel 101 oder um die Werkzeug-Rotationsachse A2 der Werkzeugspindel 103 drehangetrieben. Die entsprechende Drehbewegung des Werkzeugs 10 wird als Winkelgeschwindigkeit ω2 bezeichnet.

Es wird das Schleifwerkzeug 10 relativ zum Kegelrad 1 zugestellt (z.B. durch das Ausführen von Bewegungen der X2- und/oder Y- und/oder Z- und/oder B-Achsen), um den konkaven Bearbeitungsbereich 11 des Schleifwerkzeugs 10 mit einer Kante 4 im Bereich des Zahnkopfes 2 in spanabhebende Wirkverbindung zu bringen. Es kommt dann zu einer spanabhebenden Wirkverbindung und es wird an dieser Kante 4 des Zahns 3 durch schleifende Bearbeitung eine Kopffase 6 erzeugt.

Das Schleifwerkzeug 10 ist im Ausführungsbeispiel der Fig. 8 so ausgestaltet, dass während der schleifenden Bearbeitung die ringförmige Fläche 16 flach auf der Kopffläche 7 des Zahns 3 aufliegt. Diese Fläche 16 muss nicht zwingend abrasiv ausgeführt sein. Im Gegenteil, da die Kopffläche 7 bereits in vorausgehenden Schritten ausreichend genau definiert wurde, muss diese Kopffläche 7 im Rahmen der erfindungsgemäßen Bearbeitung keiner weiteren (Nach-)Bearbeitung unterzogen werden.

Fig. 8 zeigt eine schematische Ansicht des Zahnes 3 der Fig. 2 zusammen mit einem Axialschnitt durch ein beispielhaftes Schleifwerkzeug 10 der Erfindung. Die Werkzeug-Rotationsachse A2 steht schräg zur Werkstück-Rotationsachse B (nicht in Fig. 8 gezeigt). Im gezeigten Moment wird soeben durch den konkaven ringförmigen Bereich 11 des Schleifwerkzeugs 10 die Kopffase 6.1 der rechten Zahnflanke 5 bearbeitet. Die Kopffase 6.1 der linken Zahnflanke 5 wurde bereits in einem vorausgehenden Schritt entsprechend bearbeitet.

Ein konkaver, ringförmiger Bereich 11 ist im Sinne der Erfindung ein Bereich eines Schleifwerkzeugs 10, der im Axialschnitt des Schleifwerkzeugs 10 eine konkave Form hat. Anders ausgedrückt, geht es um eine Umfangseinschnürung oder Umfangsreduktion, die sich im Axialschnitt des Schleifwerkzeugs 10 zeigt. Der konkave Bereich 11 ist bei allen Ausführungsformen als ein Negativ-Abbild der zu erzeugenden Kopffase 6 zu verstehen. D.h. der konkave Bereich 11 ist bei allen Ausführungsformen so ausgebildet, dass er sich beim schleifenden Bearbeiten an den Kopf 2 des Zahnes 3 anschmiegt, wie man beispielhaft anhand des Beispiels der Fig. 8 erkennen kann.

Der konkave Bearbeitungsbereich 11 kann bei allen Ausführungsformen der Erfindung z.B. auch am Aussenumfang oder am Innenumfang eines topfartigen Schleifwerkzeugs 10 angeordnet sein. Dabei ist jedoch zu beachten, dass die Grundform des Werkzeugs 10 einen kollisionsfreien Zugang zu den zu schleifenden Kopfkanten 4 ermöglichen muss. Das Schleifwerkzeug 10 der Fig. 8 hat eine Ringform mit einem konkaven Bearbeitungsbereich 11 am Aussenumfang.

Das Schleifwerkzeug 10 der Fig. 9 hat eine Scheibenform mit einem konkaven Bearbeitungsbereich 11 am Aussenumfang. Bei dem Schleifwerkzeug 10 der Fig. 9 sind zwei konkave Bearbeitungsbereiche 11 am Aussenumfang vorgesehen. Das Schleifwerkzeug 10 kann daher umgedreht werden, falls einer der konkaven Bearbeitungsbereiche 11 abgenutzt sein sollte.

Um eine Kollision des Schleifwerkzeugs 10 mit dem Kegelrad 1 zu vermeiden, wird das Schleifwerkzeug 10 bei allen Ausführungsformen schräg gestellt, wie z.B. in den Figuren 6 und 8 zu erkennen ist. Vorzugsweise ist das Schleifwerkzeug 10 bei allen Ausführungsformen kleiner als das Werkzeug 20, das typischerweise im Rahmen vorausgehender Bearbeitungsschritte eingesetzt wird. In Fig. 10 ist anhand eines Beispiels der Grössenunterschied des Werkzeugs 10 gegenüber dem Werkzeug 20 zu erkennen. Die Grösse des Werkzeugs 10 ist einerseits durch die Grösse und Form der Fase 6 definiert, die zu bearbeiten ist. Andererseits muss das Werkzeug 10 kollisionsfrei in Richtung der Kanten 4 zustellbar sein, um die Flanken 5 nicht unkontrolliert zu berühren.

Vorzugsweise handelt es sich bei allen Ausführungsformen des Schleifwerkzeugs 10 um ein abrichtbares Schleifwerkzeug 10. D.h. das Schleifwerkzeug 10 ist mindestens im Bereich der ringförmigen Arbeitsfläche 13 mit einem abrasiven Material versehen, das ein mehrfaches Abrichten mit einem Abrichtwerkzeug 50 (z.B. in Form einer Abrichtrolle) ermöglicht. Die üblichen Abrichtwerkzeuge sind jedoch nicht geeignet, um ein Schleifwerkzeug 10 der Erfindung abzurichten. Das liegt daran, dass der konkave Bereich 11 des Schleifwerkzeugs 10 eine deutlich ausgeprägte Kavität aufweist. Die üblichen Abrichter können nicht weit genug in eine solche Kavität eindringen, um die dortige Ringfläche 13 (und optional auch die Ringfläche 16) abzurichten.

Fig. 10 zeigt eine schematische Seitenansicht eines Teils einer Schleifmaschine 100 (hier generell Bearbeitungsmaschine 100 genannt), die als 2-Spindel-Maschine 100 ausgelegt ist. Eine erste Werkzeugspindel 101 ist mit einem Schleifwerkzeug 20 (hier in Form eines Schleiftopfs) bestückt. Eine zweite Werkzeugspindel 103 ist mit einem Schleifwerkzeug 10 (hier beispielsweise in Form des Schleifwerkzeugs 10 der Fig. 9) bestückt. Die Bearbeitungsmaschine 100 umfasst weiterhin ein Abrichtwerkzeug 50. Dieses Abrichtwerkzeug 50 ist im Schnitt dargestellt. Anders als bei bisherigen Abrichtwerkzeugen, umfasst das Abrichtwerkzeug 50 der Erfindung vorzugsweise bei allen Ausführungsformen einen Abricht-Einsatz 51, dessen konvexe Aussenkontur und Dimensionen so gewählt sind, dass der Abricht-Einsatz 51 den konkaven Bearbeitungsbereich 11 des Schleifwerkzeugs 10 abrichten kann.

Der Abricht-Einsatz 51 kann bei allen Ausführungsformen in eine Axialbohrung 52 des Abrichtwerkzeugs 50 eingesetzt und dort befestigt werden (wie in Fig. 10 angedeutet). Der Abricht-Einsatz 51 kann bei allen Ausführungsformen aber auch ein integraler Bestandteil des Abrichtwerkzeugs 50 sein. Es kann bei allen Ausführungsformen aber auch ein Abrichtwerkzeug 50 mit geeigneter konvexer Aussenkontur und Dimension anstatt eines Abricht-Einsatzes 51 zum Einsatz kommen.

Um das Abrichtwerkzeug 50 zum Abrichten des konkaven Bearbeitungsbereichs 11 einsetzen zu können, kann die Abricht-Rotationsachse R3 z.B. relativ zum Schleifwerkzeug 20 schräg gestellt werden, wie in Fig. 10 angedeutet. In der gezeigten Momentaufnahme der Fig. 10 befindet sich das Abrichtwerkzeug 50 neben dem Werkzeug 20, um anzudeuten, dass es optional auch zum Abrichten des Werkzeugs 20 ausgelegt sein kann.

Eine weitere beispielhafte, CNC-gesteuerte Bearbeitungsmaschine 100 ist in Fig. 11 gezeigt. Eine entsprechende CNC-Steuerung 110 ist als separates Modul gezeigt, das mit der Bearbeitungsmaschine 100 über eine Kommunikationsverbindung 111 verbunden ist. Diese beispielhaft gezeigte Bearbeitungsmaschine 100 weist eine erste vertikale Schleifspindel 101 (A1-Achse) auf. An dieser Schleifspindel 101 wird das Schleifwerkzeug 20 befestigt (hier kommt beispielsweise ein Schleiftopf als Werkzeug 20 zum Einsatz). Die Bearbeitungsmaschine 100 weist zusätzlich eine zweite vertikale Schleifspindel 103 (A2-Achse) auf. An dieser Schleifspindel 103 ist das spezielle Schleifwerkzeug 10 befestigt. In der Fig. 11 ist ein Schleifwerkzeug 10 gezeigt, das eine Topfform hat, wobei der konkave Bereich andeutungsweise zu erkennen ist. Das zu bearbeitende Werkstück (Kegelrad 1) sitzt auf der B-Achse und ist dort an der Werkstückspindel 102 befestigt.

Die Erfindung, die hier beschrieben und beansprucht ist, kann aber auch auf anderen Schleifmaschinen ausgeführt werden. Zusätzlich weist diese Bearbeitungsmaschine 100 eine Schwenkachse C auf, die es ermöglicht das Kegelrad 1 zu schwenken. Ausserdem gibt es mehrere Linearachsen X1, X2, Y und Z, wie in Fig. 11 gezeigt.

Die Maschine 100 ist speziell zum Bearbeiten von Kegelrädern 1 ausgelegt und umfasst bei allen Ausführungsformen eine Werkstückspindel 102, die um die Werkstück-Rotationsachse B drehantreibbar ist. Die Werkstückspindel 102 ist zum Aufnehmen des Kegelrads 1 ausgelegt. Ausserdem umfasst die Maschine 100 bei allen Ausführungsformen mindestens eine Werkzeugspindel 101 (hier in einer vertikal hängenden Konstellation gezeigt), die um die Werkzeug-Rotationsachse A1 drehantreibbar ist. Diese Werkzeugspindel 101 ist zum Aufnehmen des Schleifwerkzeugs 20 und/oder eines Schleifwerkzeugs 10 ausgelegt. Die NC-Steuerung 110 der Maschine 100 ist speziell zum Ausführen des Verfahrens der Erfindung ausgelegt. Zum Abrichten ist optional ein Abrichtwerkzeug 50 vorgesehen (wie beispielhaft in Fig. 10 gezeigt), das um eine Abricht-Rotationsachse R3 drehbar ist. Das optionale Abrichtwerkzeug 50 ist nicht in Fig. 11 gezeigt.

**Bezugszeichen:**

| | |
|---|---|
| Kegelrad | 1 |
| Zahnkopf | 2 |
| Zahn | 3 |
| Kante | 4 |
| Zahnflanke | 5 |
| Kopffase | 6 |
| Kopfkantenbruch | 6.1 |
| Kopfkantenrundung | 6.2 |
| Kopffläche | 7 |
| Zahnlücke | 8 |
| Zahnfuß | 9 |
| Schleifwerkzeug | 10 |
| konkaver Bearbeitungsbereich | 11 |
| Topfkante | 12 |
| Ringförmige Arbeitsfläche | 13 |
| Fußrundung | 14 |
| Grundkörper | 15 |
| Ringfläche | 16 |
| | |
| Erstes (Bearbeitungs-)Werkzeug | 20 |
| | |
| Abrichtwerkzeug | 50 |
| Abricht-Einsatz | 51 |
| Axialbohrung | 52 |
| | |
| Bearbeitungsmaschine | 100 |
| (erste) Werkzeugspindel | 101 |
| Werkstückspindel | 102 |
| (zweite) Werkzeugspindel | 103 |
| | |
| Steuerung | 110 |
| Kommunikationsverbindung | 111 |
| | |
| Schleifachse / Rotationsachse | A1 |
| Werkstückachse / Rotationsachse | B |
| Schwenkachse | C |
| Hilfskreis | HK |
| Zahnhöhe an der Ferse | h_{pF} |
| Zahnhöhe an der Zehe | h_{pZ} |
| Kreis | K1 |
| Abricht-Rotationsachse | R3 |
| Schleifachse / Rotationsachse | A2 |
| Zahnbreite | b |
| Krümmungsradius | ρ |
| Zahnkopfdicke | Sta |
| Rest- Za h n ko pfd i cke | Stak |
| Schnittlinie | S1 - S1 |
| Winkelgeschwindigkeit | ω1 |
| Winkelgeschwindigkeit | ω2 |
| Linear-Achsen | X1, X2, Y, Z |

## Patentansprüche

1. Verfahren zum Nachbearbeiten eines Kegelrads (1) im Bereich des Zahnkopfes (2) eines Zahns (3), mit den folgenden Schritten:
- Bereitstellen eines Kegelrads (1) an einer Werkstückspindel (102) einer Bearbeitungsmaschine (100),
- Drehantreiben dieses Kegelrads (1) um eine Werkstück-Rotationsachse (B) der Werkstückspindel (102),
- Bereitstellen eines ersten Bearbeitungswerkzeugs (20) an einer Werkzeugspindel (101) der Bearbeitungsmaschine (100),
- Bearbeiten des Kegelrads (1) mittels des ersten Bearbeitungswerkzeugs (20),
- **gekennzeichnet durch**
- Bereitstellen eines Schleifwerkzeugs (10) als zweites Bearbeitungswerkzeug an der Werkzeugspindel (101) oder an einer weiteren Werkzeugspindel (103) der Bearbeitungsmaschine (100),
- Drehantreiben dieses Schleifwerkzeugs (10) um eine Werkzeug-Rotationsachse (A1, A2) dieser Werkzeugspindel (101, 103), wobei das Schleifwerkzeug (10) einen konkaven Bearbeitungsbereich (11) umfasst, der eine Ringform hat, der konzentrisch zu der Werkzeug-Rotationsachse (A1, A2) angeordnet ist, und der eine Umfangseinschnürung oder Umfangsreduktion bildet, die sich im Axialschnitt des Schleifwerkzeugs (10) zeigt,
- schräg Stellen der Werkzeug-Rotationsachse (A1, A2) zur Werkstück-Rotationsachse (B),
- relatives Zustellen des Schleifwerkzeugs (10) zum Kegelrad (1), um den konkaven Bearbeitungsbereich (11) des Schleifwerkzeugs (10) mit einer Kante (4) im Bereich des Zahnkopfes (2) in spanabhebende Wirkverbindung zu bringen, wobei diese Kante (4) einen Übergang zwischen einer Zahnflanke (5) des Zahnes (3) und dem Zahnkopf (2) definiert und wobei sich diese Kante (4) entlang der Zahnbreite (b) des Zahnes (3) erstreckt, um an dieser Kante (4) durch schleifende Bearbeitung eine Kopffase (6) zu erzeugen, wobei sich bei der schleifenden Bearbeitung der konkave Bearbeitungsbereich (11) an den Zahnkopf (2) des Zahnes (3) anschmiegt.

2. Verfahren nach Anspruch 1, **dadurch gekennzeichnet, dass** es sich bei der Kante (4) um einen Abschnitt des Kopfkegels des Kegelrads (1) handelt.

3. Verfahren nach Anspruch 1 oder 2, **dadurch gekennzeichnet, dass** durch die schleifende Bearbeitung an der Kante (4) ein Kopfkantenbruch (6.1) oder eine Kopfkantenrundung (6.2) als Kopffase (6) erzeugt wird.

4. Verfahren nach Anspruch 1 oder 2, **dadurch gekennzeichnet, dass** durch die schleifende Bearbeitung an der Kante (4) eine Rest-Zahnkopfdicke (sₜₐₖ) an dem Zahnkopf (2) erzeugt wird, die kleiner ist als die Zahnkopfdicke (sₜₐ) vor dem Ausführen der erfindungsgemäßen Verfahrensschritte.

5. Verfahren nach einem der Ansprüche 1 bis 4, **dadurch gekennzeichnet, dass** das Kegelrad (1) nach dem Bearbeiten des Kegelrads (1) mittels des ersten Bearbeitungswerkzeugs (20) und vor der schleifenden Bearbeitung mit dem Schleifwerkzeug (10) nicht umgespannt wird.

6. Bearbeitungsmaschine (100) zum Bearbeiten von Kegelrädern (1)
- mit einer Werkstückspindel (102), die um eine Werkstück-Rotationsachse (B) drehantreibbar ist, wobei die Werkstückspindel (102) zum Aufnehmen eines Kegelrads (1) ausgelegt ist,
- mit mindestens einer Werkzeugspindel (101, 103), die um eine Werkzeug-Rotationsachse (A1, A2) drehantreibbar ist, wobei die Werkzeugspindel (101, 103) zum Aufnehmen eines Schleifwerkzeugs (10) ausgelegt ist,
- mit einem ersten Bearbeitungswerkzeug (20) zum Bearbeiten des Kegelrads (1), das an der Werkstückspindel (102) der Bearbeitungsmaschine (100) bereitstellbar und drehantreibbar ist,
- mit einem Schleifwerkzeug (10) als zweites Bearbeitungswerkzeug, das an der Werkzeugspindel (101) oder an einer weiteren Werkzeugspindel (103) der Bearbeitungsmaschine (100) bereitstellbar und drehantreibbar ist, wobei das Schleifwerkzeug (10) einen konkaven Bearbeitungsbereich (11) umfasst, der eine Ringform hat, der konzentrisch zu der Werkzeug-Rotationsachse (A1, A2) angeordnet ist, und der eine Umfangseinschnürung oder Umfangsreduktion bildet, die sich im Axialschnitt des Schleifwerkzeugs (10) zeigt und
- mit einer NC-Steuerung (110), die zum Ausführen der Verfahrensschritte des Verfahrens eines der Patentansprüche 1 bis 5 programmiert ist.

7. Bearbeitungsmaschine (100) nach Anspruch 6, **dadurch gekennzeichnet, dass** sie ein Abrichtwerkzeug (50) umfasst, das zum Abrichten des Schleifwerkzeugs (10) ausgelegt ist, wobei das Abrichtwerkzeug (50) einen Abricht-Einsatz (51) umfasst, der zum Abrichten des konkaven Bearbeitungsbereichs (11) des Schleifwerkzeugs (10) ausgelegt ist.

## Claims

1. A method for finish machining a bevel gear (1) in the region of the tooth head (2) of a tooth (3), having the following steps:
- providing a bevel gear (1) on a workpiece spindle (102) of a machine tool (100),
- rotationally driving this bevel gear (1) about a workpiece axis of rotation (B) of the workpiece spindle (102),
- providing a first machining tool (20) on a tool spindle (101) of the machine tool (100),
- machining the bevel gear (1) by means of the first machining tool (20), **characterized in**
- providing a grinding tool (10) as a second machining tool on the tool spindle (101) or on a further tool spindle (103) of the machine tool (100),
- driving this grinding tool (10) to rotate about a tool axis of rotation (A1, A2) of this tool spindle (101, 103), wherein the grinding tool (10) comprises a concave machining region (11), which has a ring shape and which is arranged concentrically in relation to the tool axis of rotation (A1, A2), and which forms a circumferential narrowing or circumferential reduction which is shown in the axial section of the grinding tool (10),
- set the axis of rotation (A1, A2) at an angle to the workpiece axis of rotation (B),
- advancing the grinding tool (10) in relation to the bevel gear (1) in order to bring the concave machining region (11) of the grinding tool (10) into chip-removing operational connection with an edge (4) in the region of the tooth head (2), wherein this edge (4) defines a transition between a tooth flank (5) of the tooth (3) and the tooth head (2) and wherein this edge (4) extends along the tooth width (b) of the tooth (3), to produce a head chamfer (6) on this edge (4) by grinding machining
- whereby during grinding machining the concave machining region (11) fits snugly against the tooth tip (2) of the tooth (3).

2. The method according to claim 1, **characterized in that** the edge (4) is a section of the head cone of the bevel gear (1).

3. The method according to claim 1 or 2, **characterized in that** a head edge break (6.1) or a head edge rounding (6.2) is produced as a head chamfer (6) by the grinding machining at the edge (4).

4. The method according to claim 1 or 2, **characterized in that** a residual tooth head thickness (sₜₐₖ) is produced on the tooth head (2) by the grinding machining of the edge (4), which is less than the tooth head thickness (sₜₐ) before the execution of the method steps according to the invention.

5. The method according to any one of claims 1 to 4, **characterized in that** the bevel gear (1) is not rechucked after the machining of the bevel gear (1) by means of the first machining tool (20) and before the grinding machining using the grinding tool (10).

6. A machine (100) for machining bevel gears (1) having
- a workpiece spindle (102) which can be driven to rotate about a workpiece axis of rotation (B), wherein the workpiece spindle (102) is designed for accommodating a bevel gear (1),
- at least one tool spindle (101, 103), which can be driven to rotate about a tool axis of rotation (A1, A2), wherein the tool spindle (101, 103) is designed to accommodate a grinding tool (10),
- with a first machining tool (20) for machining the bevel gear (1), which can be provided and driven in rotation on the workpiece spindle (102) of the processing machine (100),
- with a grinding tool (10) as a second machining tool, which can be provided on the tool spindle (101) or on a further tool spindle (103) of the machine (100) and can be driven in rotation, wherein the grinding tool (10) comprises a concave machining region (11), which has a ring shape, which is arranged concentrically to the tool axis of rotation (A1, A2), and which forms a circumferential narrowing or circumferential reduction, which is shown in the axial section of the grinding tool (10) and
- an NC controller (110) which is programmed to execute the method steps of the method of any one of the claims 1 to 6.

7. The machine (100) according to claim 7, **characterized in that** it comprises a dressing tool (50), which is designed for dressing the grinding tool (10), wherein the dressing tool (50) preferably comprises a dressing insert (51), which is designed for dressing the concave machining region (11) of the grinding tool (10).

## Revendications

1. Procédé de réusinage d'une roue conique (1) dans la zone de la tête de dent (2) d'une dent (3), comprenant les étapes suivantes consistant à :
- monter une roue conique (1) sur une broche de pièce (102) d'une machine d'usinage (100),
- faire tourner cette roue conique (1) autour d'un axe de rotation de pièce (B) de la broche de pièce (102),
- monter un premier outil d'usinage (20) sur une broche d'outil (101) de la machine d'usinage (100),
- usiner la roue conique (1) à l'aide du premier outil d'usinage (20),
**caractérisé par** les étapes consistant à :
- monter un outil de rectification (10) comme deuxième outil d'usinage sur la broche d'outil (101) ou sur une autre broche d'outil (103) de la machine d'usinage (100),
- faire tourner cet outil de rectification (10) autour d'un axe de rotation d'outil (A1, A2) de cette broche d'outil (101, 103), l'outil de rectification (10) comprenant une zone d'usinage concave (11) de forme annulaire qui est agencée de façon concentrique par rapport à l'axe de rotation d'outil (A1, A2) et qui forme un rétrécissement ou une diminution périphérique visible en coupe axiale de l'outil de rectification (10),
- incliner l'axe de rotation d'outil (A1, A2) par rapport à l'axe de rotation de pièce (B),
- approcher l'outil de rectification (10) de la roue conique (1) pour amener la zone d'usinage concave (11) de l'outil de rectification (10) en liaison active d'enlèvement de copeaux avec une arête (4) dans la zone de la tête de dent (2), cette arête (4) définissant une transition entre un flanc de dent (5) de la dent (3) et la tête de dent (2), et cette arête (4) s'étendant le long de la largeur de dent (b) de la dent (3), pour produire par rectification au niveau de cette arête (4) un chanfrein de tête (6), l'usinage par rectification de la zone d'usinage concave (11) épousant la forme de la tête de dent (2) de la dent (3).

2. Procédé selon la revendication 1, **caractérisé en ce que** l'arête (4) est une section du cône de tête de la roue conique (1).

3. Procédé selon la revendication 1 ou 2, **caractérisé en ce que** l'usinage par rectification au niveau de l'arête (4) génère une cassure de tête (6.1) ou une courbure de tête (6.2) comme chanfrein de tête (6).

4. Procédé selon la revendication 1 ou 2, **caractérisé en ce que** l'usinage par rectification de l'arête (4) génère une épaisseur de tête de dent résiduelle (Sₜₐₖ) au niveau de la tête de dent (2) qui est inférieure à l'épaisseur de tête de dent (Sₜₐ) avant réalisation des étapes de procédé selon l'invention.

5. Procédé selon l'une des revendications 1 à 4, **caractérisé en ce que** la roue conique (1) n'est pas resserrée après l'usinage de la roue conique (1) à l'aide du premier outil d'usinage (20) et avant l'usinage par rectification avec l'outil de rectification (10).

6. Machine d'usinage (100) pour usiner des roues coniques (1) comprenant
- une broche de pièce (102) pouvant être entraînée en rotation autour d'un axe de rotation de pièce (B), la broche de pièce (102) étant conçue pour recevoir une roue conique (1),
- au moins une broche d'outil (101, 103) pouvant être entraînée en rotation autour d'un axe de rotation d'outil (A1, A2), la broche d'outil (101, 103) étant conçue pour recevoir un outil de rectification (10),
- un premier outil d'usinage (20) pour usiner la roue conique (1) pouvant être fixé et entrainé en rotation sur la broche de pièce (102) de la machine d'usinage (100),
- un outil de rectification (10) comme deuxième outil d'usinage pouvant être monté et entraîné en rotation sur la broche d'outil (101) ou sur une autre broche d'outil (103) de la machine d'usinage (100), l'outil de rectification (10) comprenant une zone d'usinage concave (11) de forme annulaire et agencée de façon concentrique par rapport à l'axe de rotation d'outil (A1, A2) et formant un rétrécissement ou une diminution périphérique visible en coupe axiale de l'outil de rectification (10), et
- une commande numérique (110) programmée pour réaliser les étapes du procédé selon l'une des revendications 1 à 5.

7. Machine d'usinage (100) selon la revendication 6, **caractérisée en ce qu'**elle comprend un outil de dressage (50) conçu pour dresser l'outil de rectification (10), l'outil de dressage (50) comprenant un insert de dressage (51) conçu pour dresser la zone d'usinage concave (11) de l'outil de rectification (10).
